# EUROPÄISCHE PATENTSCHRIFT

(11) **EP 0 433 398 B1**
(45) Veröffentlichungstag und Bekanntmachung des Hinweises auf die Patenterteilung: **18.11.1993**
(21) Anmeldenummer: 89911811.1
(22) Anmeldetag: 11.09.1989
(51) Int. Cl.: C01B 21/064, C04B 35/58, B01J 3/06

(54) **BORNITRID HOHER HÄRTE**
BORON NITRIDE OF HIGH HARDNESS
NITRURE DE BORE DE DURETE ELEVEE

(30) Priorität: 10.09.1988 DE 3830840
(43) Veröffentlichungstag der Anmeldung: 26.06.1991
(73) Patentinhaber: WILDENBURG, Jorg, D-53121 Bonn (DE); WILL, Georg, D-53913 Swisstal-Buschhoven (DE)
(72) Erfinder: WILDENBURG, Jorg, D-53121 Bonn (DE); WILL, Georg, D-53913 Swisstal-Buschhoven (DE)
(74) Vertreter: Müller-Gerbes, Margot, Dipl.-Ing.
(86) Internationale Anmeldenummer: EP8901049
(87) Internationale Veröffentlichungsnummer: WO9002704

(56) Entgegenhaltungen:
- US-A- 3 233 988
- US-A- 4 150 098
- US-A- 4 361 543
- CHEMICAL ABSTRACTS, vol. 93, no. 10, September 1980, Columbus, Ohio, USA, Seite 153; rechte Spalte; ref. No. 97824 C & JP-A-8060008 (NAT. INST. FOR RES. IN INORG. Mat.) (6/5/1980) s. Zusammenfassung

## Beschreibung

Kubisches Bornitrid, cBN, ist ein bekanntes industrielles Schleifmittel. Es wird aus hexagonalem Bornitrid, hBN, bei hohen Drucken und Temperaturen, sehr oft unter Einwirkung von Mg, Li, Mg₃N₂ und Li₃N als Flußmittel (Katalysator) hergestellt, wie beispielsweise in der US-PS 2947 617 beschrieben. Um die kubische Form des Bornitrids zu erhalten, muß diese Kristallbildung gefördert werden. Das geschieht einerseits durch den Zusatz ausgewählter aktiver Katalysatoren auf Basis von Alkalimetallen, Erdalkalimetallen, Blei, Zinn, Antimon bzw. Nitriden dieser Metallen u.a. und andererseits durch ein gezieltes das Kristallwachstum förderndes langsames Abkühlen der Schmelze. Typische Kristallmorphologie für das cBN sind das Oktaeder oder Tetraeder. Typische Kristallgrößen reichen von ca. 20 bis 500 µ (0.02-0.5 mm), abhängig von den Herstellungsbedingungen.

In der Industrie wird hexagonales Bornitrid in Preß- und Sinterkörpern als Pulver, Paste oder Spray, z.B. um Gießformen herzustellen oder auszukleiden oder auch als Gleitmittel als temperaturfestes Formmaterial verwendet.

Kubisches Bornitrid, das sich gegenüber hexagonalem Bornitrid durch seine höhere Temperaturfestigkeit und Härte auszeichnet, die nur geringfügig unter der des Diamanten liegt, findet Anwendung als spanendes Korn in der Werkzeug- und Schleifmittelindustrie. Eine weitere Form von Bornitrid ist unter dem Namen "turbostratisches Bornitrid, tBN," bekannt. Es dient als Ausgangsmaterial für Preßkörper und zum Herstellen von kubischem Bornitrid.

Darüber hinaus wurde bisher nur von Sumiya u.a., siehe Materials Research Bulletin, 18, Seiten 1203-1207, 1983 ein sogenanntes "amorphes Bornitrid", im folgenden aBN-1 genannt, für die weiche, bei Normaldruck hergestellte Phase synthetisiert. Dieses aBN-1 ist ein Bornitrid, welches keine graphitähnliche Schichtstruktur mehr besitzt, sondern aus Kristallgitter-Fragmenten besteht und weich ist. Dabei ist nicht gesichert, ob aBN-1 wirklich amorph ist oder ob es nur sehr feinpulverig vorliegt.

Eine geeignete Vorrichtung zum Erzeugen der Drucke und Temperaturen, um aus hexagonalem Bornitrid kubisches Bornitrid herzustellen, wird z.B. in der US-PS 2941 243 beschrieben.

Es besteht nun ein großer industrieller Bedarf an Schleifmaterialien hoher Härte. Aufgabe der Erfindung ist es, die Palette der bekannten Schleifmittel durch ein neues zu ergänzen bzw. zu erweitern.

Gemäß der Erfindung wurde ein amorphes Bornitrid (aBN-2) mit röntgen- und elektronenstrahlamorpher Struktur und mit einer zum Ritzen von Diamant ausreichenden Härte aufgefunden. Es ist gekennzeichnet durch
eine amorphe (innere) Struktur, d.h. nichtkristalline Anordnung der Atome. Äußerlich können die Körner jedoch eine pseudomorphe Form aufweisen, d.h. es kann noch die hexagonale oder kubische Form bestehen. Die Körner können auch eine glasartige äußere Form aufweisen. Zum Unterschied gegenüber dem bei Normaldruck hergestellten als amorph bezeichneten bekannten Bornitrid, aBN-1 genannt, wird das erfindungsgemäße amorphe Bornitrid als aBN-2 bezeichnet. Das erfindungsgemäße Bornitrid ist röntgen- und elektronenstrahlamorph.

Gemäß der Erfindung kann amorphes Bornitrid hoher Härte aus hexagonalem oder turbostratischem Bornitrid (BN) als Ausgangsmaterial, das bei Drucken von über 70 Kbar, bevorzugt 75 Kbar oder mehr bei Temperaturen von mindestens 1650°C oder höher behandelt wird, dadurch gewonnen werden, daß das Ausgangsmaterial den Drucken und der Temperatur so lange unterworfen wird, bis es vollständig aufgeschmolzen ist, anschließend die so erhaltene Bornitridschmelze abgeschreckt wird und Körner von amorphem Bornitrid (aBN-2) mit röntgen- und elektronenstrahlamorpher Struktur und einer zum Ritzen von Diamant ausreichenden Härte gebildet werden. Die in dem Ausgangsmaterial enthaltenden kristallinen Bestanteile werden erfindungsgemäß vollständig aufgeschmolzen und erhalten durch das Abschrecken die Konsistenz einer metastabilen unterkühlten Schmelze, wobei Körner vollständig amorphen Bornitrids mit röntgen- und elektronenstrahlamorpher Struktur, als aBN-2 bezeichnet, entstehen.
Bei der Verfahrensdurchführung wird nach dem Aufschmelzen zum Abschrecken des Ausgangsmaterials zuerst die Wärmezufuhr abgestellt, ggf. eine teilweise Abkühlung der Schmelze noch unter vollem Druck durchgeführt, und dann die Druckentlastung durchgeführt.
Um das Verfahren mit guten Ergebnissen durchzuführen, wird vorgesehen, daß nach dem Aufheizen des Ausgangsmaterials in dem Schmelzbereich die Reaktionsbedingungen von Druck und Temperatur über einen längeren Zeitraum aufrechterhalten werden. Hierbei sollte ein Zeitraum von mindestens mehreren Minuten eingehalten werden. Die Zeitdauer steigt abhängig mit steigender Menge des eingesetzten Materials. Auf diese Weise wird erreicht, daß alle vorhandenen Kristallkeime zerstört werden, d.h. keine Kristallkeime mehr vorhanden sind. Die Aufheizzeiten betragen je nach Menge an Ausgangsmaterial mit den bekannten Vorrichtungen ca. 5 bis 30 Minuten.

Das erfindungsgemäße Verfahren wird unter Einsatz von sauberem, d.h. reinem Ausgangsmaterial, bevorzugt hexagonalem Bornitrid, bei den angegebenen Drucken und Temperaturen durchgeführt.

Erfindungsgemäß wurde gefunden, daß amorphes Bornitrid hoher Härte (aBN-2) ohne,aber auch mit Zusatz von Katalysatoren hergestellt werden kann. Hierbei sind aktive Katalysatoren und passive Katalysatoren zu unterscheiden.

Die aktiven Katalysatoren greifen als Reaktionspartner selbst mit in den Prozeß ein und benötigen einen großen Massenanteil an der Ausgangssubstanz. Dazu liegen sie als Fremdphase im Verfahrensprodukt vor bzw. bestimmen sehr stark die Form und Größe des Verfahrensproduktes. Sie müssen anschließend entfernt werden. Erfindungsgemäß wurde gefunden, daß die Ausbeute an amorphem Bornitrid, aBN-2, ohne Zusatz von Katalysator zu dem Ausgangsmaterial bzw. bei Einsatz von passiven Katalysatoren deutlich höher ist als bei Einsatz von aktiven Katalysatoren. Benutzt wurden als aktive Katalysatoren Li₃N, Mg₃N₂, BCl₃, CCl₄, NH₄Cl , NH₄F, Ca₃B₂N₄.

Effektvoller wurden erfindungsgemäß passive Katalysatoren eingesetzt. Diese wirken fördernd auf das Fließverhalten und den Wärmeübergang beim Ausgangsmaterial während des Pressens und Aufschmelzens. Bei Beendigung des Verfahrens zum Herstellen von aBN-2 liegen sie entweder unverändert bzw. bei Wasser als Katalysator gar nicht mehr vor. Die Ausbeute an aBN-2 wird bei Einsatz passiver Katalysatoren in bezug auf das Ausgangsmaterial bis auf nahezu 100 % gesteigert. Bei Einsatz passiver Katalysatoren können größere Körner von aBN-2 hergestellt werden. Geeignete passive Katalysatoren sind z.B. Pt, Zr, H₂O, Co und C (Platin, Zirkonium, Wasser, Kobalt und Kohlenstoff).

Es hat sich als vorteilhaft erwiesen, passive Katalysatoren in kleineren Mengen, wie etwa 3 bis 20 Gew.-% bezogen auf die Menge des Ausgangsmaterials, zuzugeben.

Die direkte Herstellung von amorphem Bornitrid aBN-2 ohne Katalysatoren gelingt mit guter Ausbeute bereits ab Drucken von 75 bis 78 Kbar bei Temperaturen von 1800 bis 2000°C, bevorzugt ab 1900°C.

Sofern die Reaktionsbedingungen von Temperatur und Druck hoch genug und über einen ausreichend langen Zeitraum aufrechterhalten werden, so daß erfindungsgemäß eine vollständige kristallkeimfreie Schmelze erhalten wird, wird das Ausgangsmaterial vollständig in amorphes Bornitrid aBN-2 umgewandelt. Läßt man hingegen die Reaktionsbedingungen der Temperatur und des Druckes nicht ausreichend hoch und lange genug auf das Ausgangsmaterial (BN) einwirken, so bildet sich u.a. kubisches Bornitrid.

Weitere Ausgestaltungen der Erfindung werden nachfolgend an einem Ausführungsbeispiel und anhand der Zeichnung erläutert.
Es zeigen
- Figur 1 bis 8: elektronenmikroskopische Bilder verschiedenartiger Bornitride
- Figur 9: Phasendiagramm der verschiedenen Bornitride
- Figur 10: Bild eines geritzten Diamanten ⊥ (001)
- Figur 11: Bild von angeschliffenen aBN-2-Körnern
- Figur 12: Schemaansicht einer Hochdruckpresse
- Figur 13: schematische Zusammenstellung eines Preßwerkzeuges
- Figur 14: schematischer Querschnitt durch einen Hochdruckeinsatz mit Platinkapsel
- Figur 15: Temperaturverteilung im Hochdruckeinsatz beim Aufheizen
- Figur 16: Schema einer Härteprüfung
- Figur 17: Härtemeßkurven von aBN-2 nach Figur 16
- Figur 18: Meßkurve von cBN mit harter Röntgenstrahlung
- Figur 19: Meßkurven von aBN-2 mit harter Röntgenstrahlung.

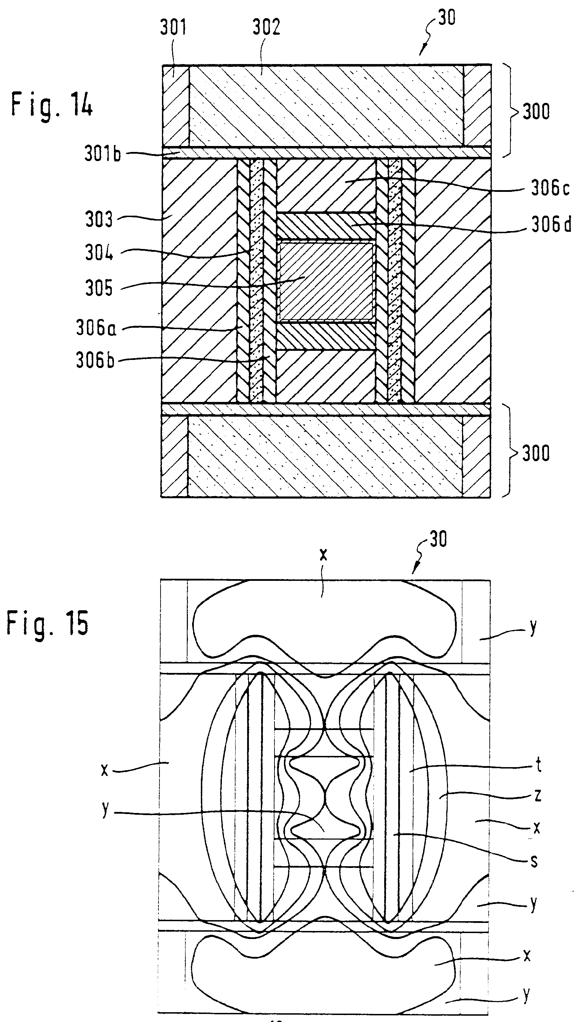

Als Ausgangsmaterial für die Herstellung von amorphem Bornitrid aBN-2 wurde entweder hexagonales oder turbostratisches Bornitrid eingesetzt. Es wurde mit 8 % Wasser zu einer Paste angerührt und homogenisiert. Diese Paste wurde in einem Platinzylinder von 3 mm Durchmesser und 5 mm Höhe verfüllt und mit einem Deckel verschlossen. Die so entstandene Platinkapsel wird mit einer hydraulischen Handpresse von 5 mm auf etwa 3 mm Höhe verdichtet. Dies geschieht mit einer Preßkraft von ca. 5 t. Das Bornitrid wird hierbei verdichtet und Gasblasen entfernt. Die Platinkapsel selbst wird durch diesen Prozeß kaltverschweißt. Die so entstandene verdichtete Kapsel wird in einen Hochdruckeinsatz, s. Figur 14, bestehend aus zylindrisch angeordnetem Pyrophyllit, Graphit, Korund, Molybdän und Stahlteilen eingebaut. Der Hochdruckeinsatz 30 ist ebenfalls zylindrisch und um seine Längsachse rotationssymmetrisch und zu seiner Querachse spiegelsymmetrisch aufgebaut. Im Zentrum ist die Platinkapsel 305, enthaltend das Ausgangsmaterial BN, angeordnet. Die zylindrische Platinkapsel sitzt mittig in einem Rohr 306b aus Pyrophyllit, das die Kapsel beidseitig überragt. Oben und unten sitzt auf der Platinkapsel je ein aus zwei Deckelteilen 306d und 306c aus Pyrophyllit zusammengesetzter Stopfen, der die Rohre oberseitig bündig abschließt. Das Pyrophyllit ist ein natürliches Material, elektrisch isolierend, das Drucke sehr gut überträgt und sich auch bei den erforderlichen hohen Drucken nicht umschichtet. An das Rohr 306b schließt sich nach außen ein Graphitrohr 304 an, das als Heizung zur Erzeugung der gewünschten hohen Temperaturen bei entsprechender hoher Strombelastung dient. An das Graphitrohr 304 schließt sich nach außen wiederum ein Rohr 306a aus druckfestem elektrisch isolierendem Pyrophyllit an. Den äußeren Abschluß bildet dann ein dickwandiges Rohr 303 aus Pyrophyllit, ggf. in weicherer Einstellung. Die so isolierte beheizbare Platinkapsel ist dann oberseitig und unterseitig mit Stahl oder Molybdänplatte 301b abgedeckt, die mit dem Graphitrohr 304 kontaktieren und als Stromzuleitung dienen. Den Abschluß bilden Deckel 300, die Deckplatten 302 aus Sinterkorund, Al₂O₃, aufweisen, die in Stahlringen 301 gefaßt sind und als Anlagefläche für Preßstempel dienen. Das Platinhäutchen der Kapsel 305 dient als Schutzüberzug für das Bornitrid und ist bis etwa 1680°C temperaturstabil. Geschmolzenes Platin ist dann ein Indiz, das diese Temperatur bei der Herstellung von aBN-2 überschritten wurde.

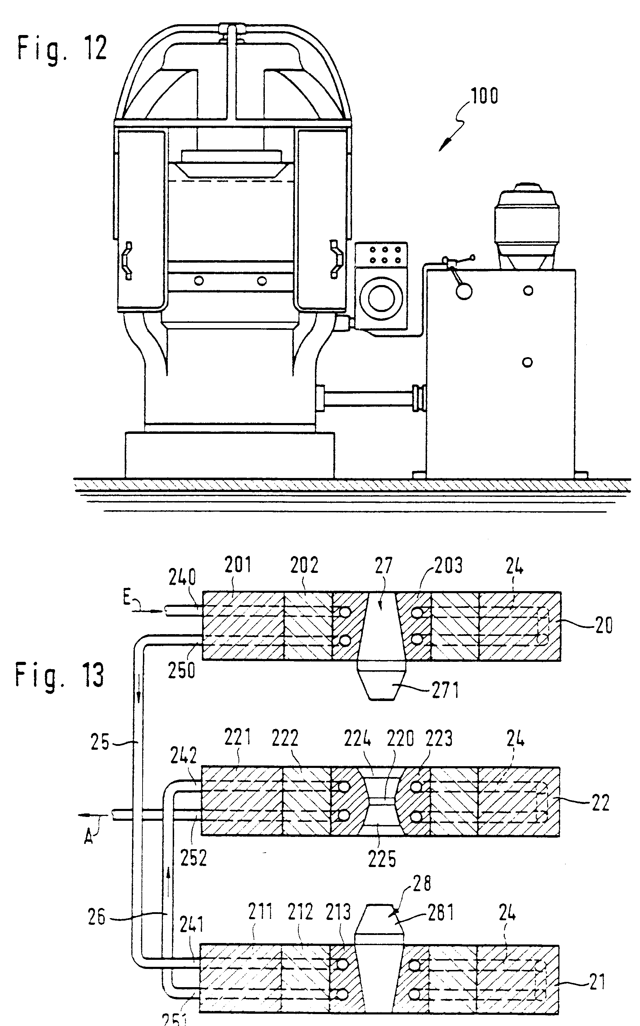

Dieser Hochdruckeinsatz 30 ermöglicht, Druck und Temperatur in geeigneter Weise und der geforderten Höhe dem Bornitrid im Kapselinneren zuzuführen. Der fertig aufgebaute Hochdruckeinsatz 30 wird in das Preßwerkzeug, siehe Figur 13, eingesetzt. Dieses besteht im Prinzip aus drei rotationssymmetrischen Teilen:
- Der oberen Preßplatte 20 mit Wasserkühlung und Stempellager mit Druckstempel 27 aus Wolframcarbid-Hartmetall.
- Der mittleren Druckmanschette 22 mit Wasserkühlung und der inneren ringförmigen Druckmatrix 223 aus Wolframcarbid-Hartmetall.
- Der unteren Preßplatte 21, die spiegelsymmetrisch zur oberen angebracht wird und ebenfalls Wasserkühlung, Stempellager und Druckstempel 28 aus Wolframcarbid-Hartmetall besitzt.

Die Preßplatten 20, 21 sowie die Druckmanschette 22 sind jeweils aus mehreren Ringen 201, 202, 203 bzw. 211, 212, 213 bzw. 221, 222, 223 zusammengesetzt, von denen die beiden äußeren aus Stahl oder dergleichen hergestellt sind und der jeweils innerste Ring aus Hartmetall besteht. Hierbei bilden die inneren Ringe der Preßplatten die Stempellager für die Druckstempel 27 bzw. 28 und sind ebenfalls aus Wolframcarbid-Hartmetall hergestellt. Die Druckstempel sind am Kopf konisch ausgebildet und werden in entsprechende konische Ausnehmungen 224, 225 oberseitig und unterseitig der Druckmatrix 223 eingeführt.
Figur 13 zeigt das Preßwerkzeug in ausgefahrener Stellung der Teile. Die Druckmatrix 223 weist zentrisch in der Mitte einen zylindrischen Hohlraum 220 auf, der auch als Gürtel bezeichnet wird und in den der Hochdruckeinsatz 30 eingesetzt wird, wobei er jedoch nach oben und unten in die konisch-förmigen Erweiterungen 224 hineinragt. Beim Zufahren der Preßstempel 27, 28 wird dann der Hochdruckeinsatz 30 in Richtung der engsten Stelle 220, dem Gürtel, zusammengepreßt. Alle Metallteile des Preßwerkzeuges einschließlich der Stempel werden durch elektrischen Strom beheizt und hierbei sehr stark erwärmt. Aus diesem Grunde werden die Werkzeugteile 20, 21, 22 gekühlt. Hierzu sind sie z.B. mit durchlaufenden Kühlkanälen 24 ausgestattet, die hier nur schematisch angedeutet sind, die über Einläufe 240, 241, 242 an jedem Preßwerkzeugteil und Ausläufe 250, 251, 252 an ein Kühlwassersystem angeschlossen sind. Hierbei ist der Kühlwasserkreislauf so gestaltet, daß das Kühlwasser zuerst in die obere Preßplatte in Pfeilrichtung E am Einlauf 240 eingeführt wird, dann von der oberen Preßplatte in die untere Preßplatte über die Leitung 25 über den Einlauf 241 eingeführt, aus der unteren Preßplatte dann über die Leitung 26 in die Druckmanschette über den Einlauf 242 eingeführt und aus dieser am Ausgang A wieder der Kühlwasserversorgung zugeführt wird.
Das beschriebene dreiteilige Preßwerkzeug wird während der Synthese von aBN-2 an einen Kühlwasserkreislauf sowie an eine Quelle für den Heizstrom angeschlossen. Das Kühlwasser senkt die Materialbelastung für Stahl und Hartmetall. Die Stromzuführung ist so ausgelegt, daß bei geringer Spannung (2-10V) ein hoher Strom (40-200A) über die äußeren Preßplatten 20, 21 in das Innere des Einbaus fließen kann und dort den Graphithohlzylinder 305 aufgrund seines Eigenwiderstandes aufheizt. Dieser Miniaturofen befindet sich isoliert durch den Pyrophyllitzylinder 306b als Hülle um die Platinkapsel 305.

Das heizbare wassergekühlte Preßwerkzeug wird in eine hydraulische 630-t-Presse eingesetzt und mit einer Preßkraft von maximal 110 t beaufschlagt, siehe schematische Darstellung einer Presse 100 in Figur 12.

Die Reaktionszeiten betragen 15 bis 30 Minuten. Die in der Ausgangssubstanz enthaltenen kristallinen Bestandteile werden durch die Druck- und Temperaturbedingungen vollständig aufgeschmolzen.

Nach dieser Zeit wird der Hochdruckeinsatz bzw. die Kapsel durch Abstellen des Heizstroms mit anschließender Druckentlastung in Sekundenschnelle abgeschreckt. Nach dem Abschrecken ist das Ausgangsmaterial umgewandelt und besitzt die Konsistenz einer metastabilen unterkühlten Schmelze, d.h. glasartiges Material - BN-Glas - als aBN-2 bezeichnet. Da die Masse der eingesetzten Kapseln gering ist, kann die Kapsel nach Abstellen des Heizstromes in Sekundenschnelle abkühlen (von Schmelztemperatur bis auf etwa Raumtemperatur), wodurch die Kristallisation verhindert wird. Die Dekompression hingegen nimmt mehrere Minuten in Anspruch.

Für die Herstellung der Ausgangsmischung wurden 46mg hBN und 4 mg Wasser verwendet. Zur Temperaturerzeugung wurde ca. 1kW Heizleistung verbraucht. Für die Wasserkühlung während der Synthese durchliefen ca. 500 l Wasser das Kühlsystem. Die schnellste gemessene Aufheizzeit von 20°C auf 1700°C betrug ca. 3 Min., die Druckbeaufschlagung durchschnittlich 5 Min. bis Erreichen des Maximalwertes vorgegeben durch die eingesetzte Presse von ca. 78 Kbar.

Die Temperatureinstellung und -regelung wurde nach Messungen an Eicheinbauten und Extrapolation der Leistungskurve vorgenommen. Der Syntheseeinbau wurde mit Ni-NiCr-Thermoelementen bis 1200°C gemessen und gegen die Heizleistung abgetragen. Die erhaltene Meßkurve wurde rechnerisch bis 2000°C extrapoliert.

Anhand der so gewonnenen Daten wird die Heizleistung manuell gesteuert. Zur weiteren Temperaturkontrolle wurden Thermochrom-Farben anstelle der Probe eingesetzt. Diese oxidischen Farben zeigen bei Erreichen einer Mindesttemperatur einen charakteristischen Farbumschlag. Durch mikroskopische Auswertung konnten so auch feinste Temperaturgradienten im Probenraum gemessen werden. Ferner wurde anhand der Aufschmelzungen des Tiegelmaterials eine Temperaturabschätzung durchgeführt. Die erreichte Maximaltemperatur lag demnach bei 2000°C.

In der Figur 15 ist eine Temperaturverteilung beim Aufheizen des Hochdruckeinsatzes im Preßwerkzeug schematisch dargestellt. Man erkennt, wie die hohen vom Graphitrohr 304 erzeugten Temperaturen in der Mitte und in der Kapsel sich ausbreiten und gleichzeitig außenseitig eine Abschirmung durch die Deckelteile 302 und das Pyrophyllitrohr 303 erfolgt. Die momentane Temperaturaufnahme ist bei Erreichen von 1600°C im Graphitrohr dargestellt, wobei in den angrenzenden Zonen t eine Temperatur von etwa 1400°C herrscht, in der sich anschließenden Zone z eine Temperatur von 1100°C, im Zentrum y eine Temperatur von etwa 700°C und außenseitig in den Bereichen x etwa 740°C herrschen.

Der erreichte Druck im Inneren der Kapsel wurde durch Eichdruckkurven von Wismutstreifen (mit bekannten Ubergangsdrucken) und rechnerische Methoden bestimmt. Hier wurden maximal 80 Kbar erreicht.

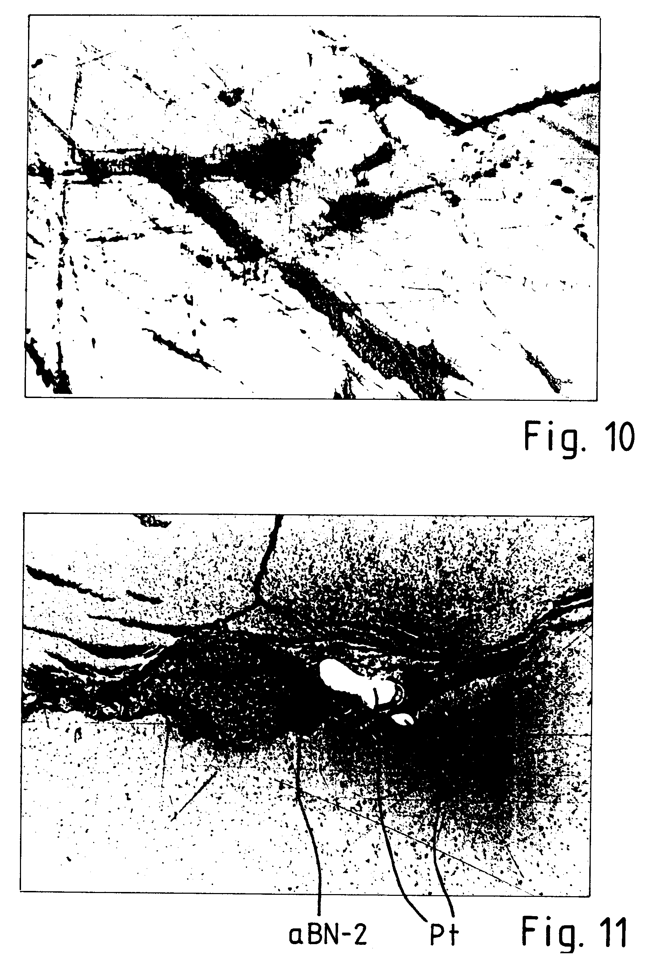

Das erhaltene Produkt besteht aus wasserklaren bis bernsteinfarbenen Körnern von 1/100 mm bis 1 mm Durchmesser, die als kompakte Masse weiß bis braun-schwarz erscheinen. Aufgrund der geringen Abmessungen des verwendeten Probenraumes ist die Ausbeute an großen Körnern (0.5 bis 1 mm) gering, d.h. 3 Volumen%. Mit 50 Volumen% besteht der größte Anteil aus ca. 1/50 mm großen Körnern. Der Restanteil besteht aus in der Größe gestreuten Körnern. Die Körner sind röntgen- und elektronenstrahlamorph und ritzen Diamant auf allen Flächen, siehe Figur 10. Sie zeigen im polarisierten Licht Spannungen, besitzen Isolatoreigenschaften und leiten Wärme gut ab. Rasterelektronenmikroskopische Bilder zeigen eine glasartige Kornform, jedoch sind auch pseudomorphe Formen möglich. Die einzelnen Körner weisen eine etwas unregelmäßige amöbenartige Form auf.

Das erfindungsgemäße amorphe Bornitrid aBN-2 ist ein zähes Material, das sich vorteilhaft z.B. bei Schleifscheiben einsetzen läßt, da es weniger Splitterneigung zeigt. Das ist auch ein Vorteil gegenüber Diamanten und kubischem Bornitrid, die nach den verschiedenen Spaltflächen des Kristallgitters spaltbar sind. Es hat eine wesentlich höhere Lebensdauer als Schleifmaterial gegenüber z.B. cBN oder Diamant, da diese aufgrund der Kristallstruktur eher splittern. Das neue amorphe und zähe Bornitrid aBN-2 hingegen ist nicht orientiert spaltbar.

Bei Zusatz von passivem Katalysator, z.B. Platin oder Kobalt, wird eine größere Ausbeute an größeren Körnern erhalten.

Nachfolgend wird das erfirndungsgemaβe Produkt - amorphes Bornitrid aBN-2 - mit den verschiedenen bekannten Varianten von Bornitriden anhand elektronenmikroskopischer Bilder verglichen.
Es zeigen:

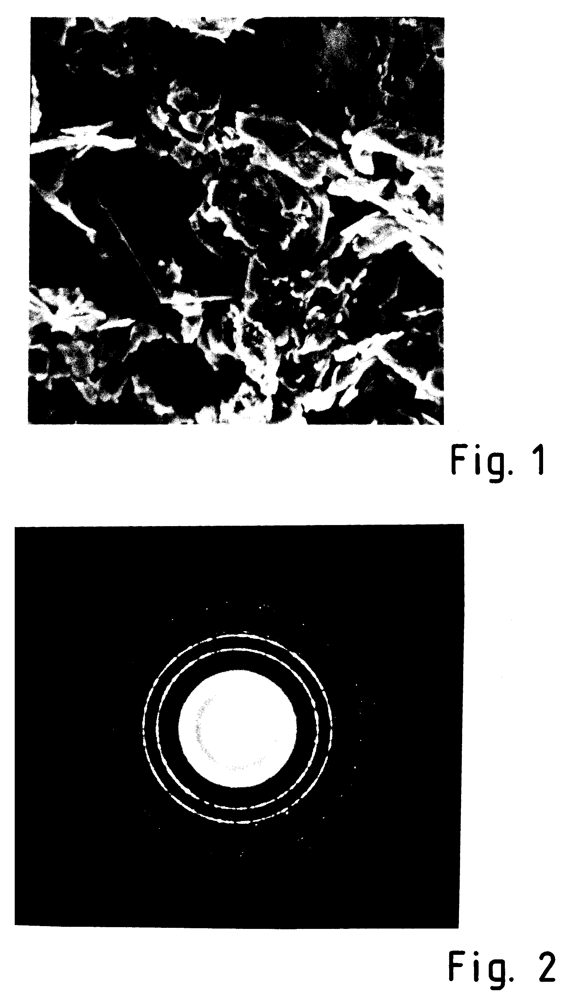

- Figur 1: hexagonales Bornitrid (hBN) in einer REM-Aufnahme, ca. 10600 x vergrößert. Es sind deutlich 6-eckige Plättchen erkennbar.
- Figur 2: hexagonales Bornitrid (hBN) in einer TEM-Beugungsaufnahme (0001). Erkennbar viele feine Reflexpunkte auf konzentrischen Kreisen. hBN ist Ausgangsmaterial für das Herstellen von aBN-2.

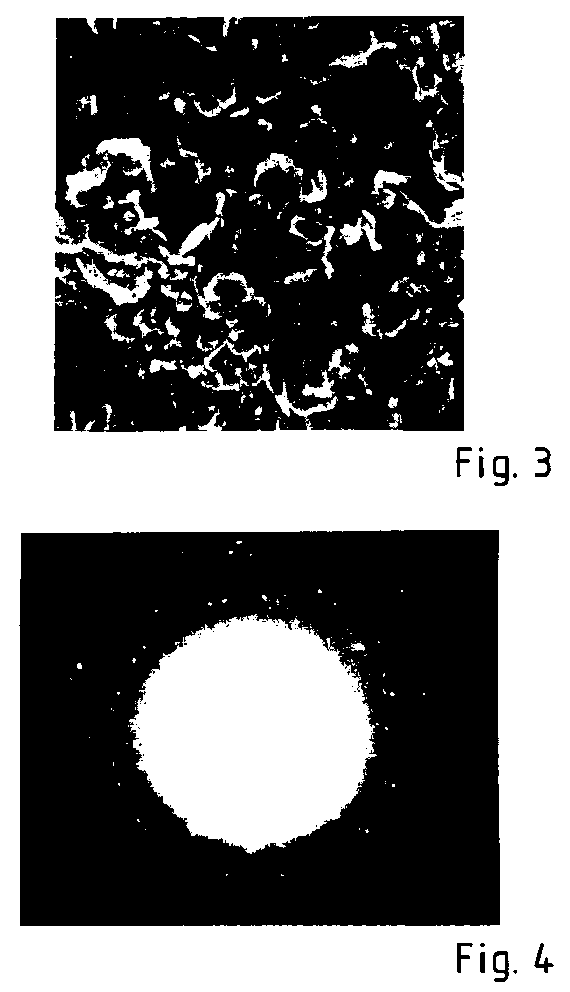

- Figur 3: "turbostratisches" Bornitrid (tBN) in einer REM-Aufnahme, ca. 10600 x vergrößert. Ausgangsmaterial für die Herstellung von aBN-2.

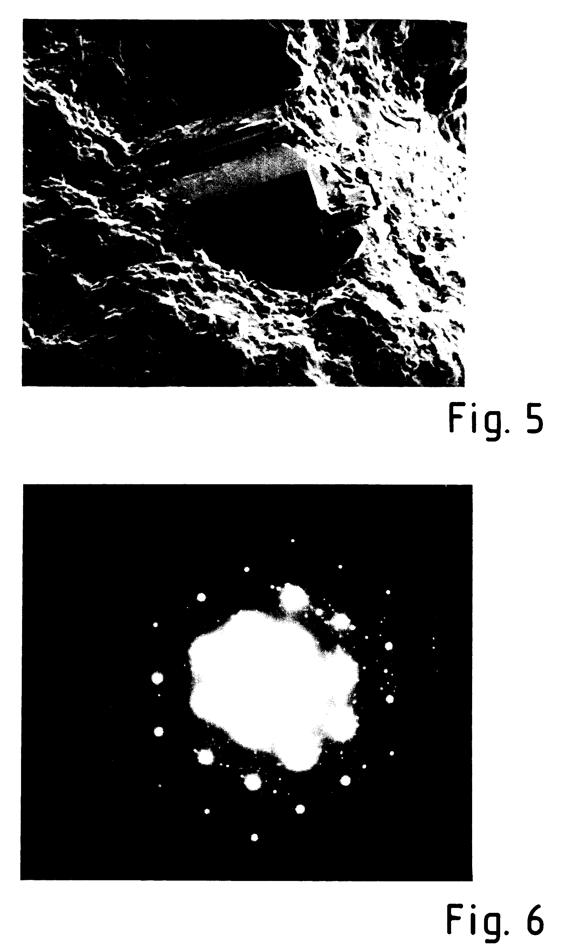

- Figur 4: "turbostratisches" Bornitrid (tBN) in einer TEM-Beugungsaufnahme (0001). Erkennbar sind zahlreiche, z.T. gedoppelte Reflexpunkte.
- Figur 5: kubisches Bornitrid (cBN) in einer REM-Aufnahme, ca. 570 x vergrößert. Bisher härteste BN-Modifikation in würfelförmigem Habitus gemäß US-PS 2947 617.
- Figur 6: kubisches Bornitrid (cBN) in einer TEM-Beugungsaufnahme (111). Man erkennt wenige starke Reflexpunkte in 6-eckiger Gitteranordnung mit Blick in Richtung einer 3-zähligen Raumachse.

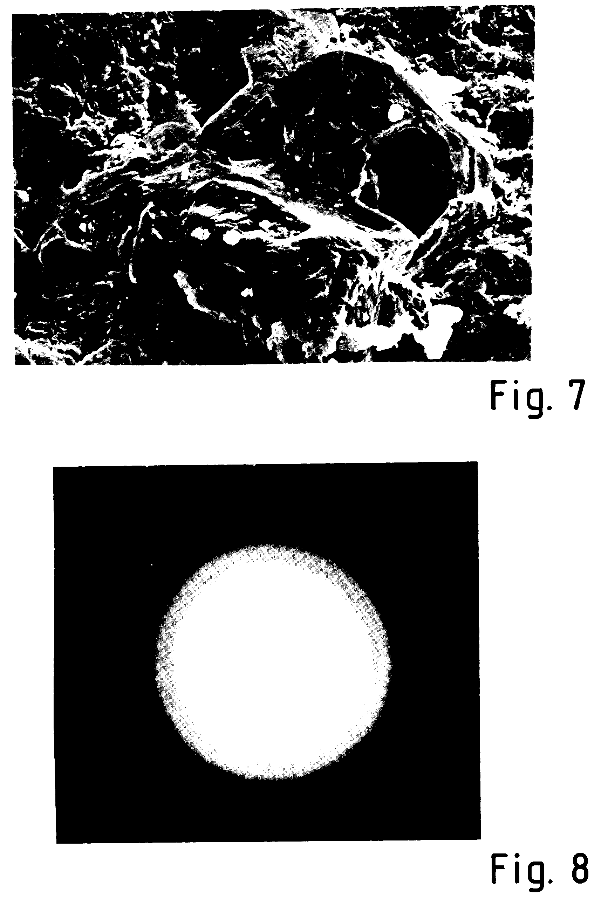

- Figur 7: neuartiges amorphes Bornitrid (aBN-2) in einer REM-Aufnahme, ca. 800 x vergrößert. Erkennbar sind Schmelzpartikel ohne Symmetrie oder Flächen in feinerer Matrix.
- Figur 8: neuartiges amorphes Bornitrid (aBN-2) in einer TEM-Beugungsaufnahme ohne Orientierung. Erkennbar keine (!) Reflexpunkte, sondern nur diffuse Ringe. Es handelt sich um ein echtes amorphes Material.

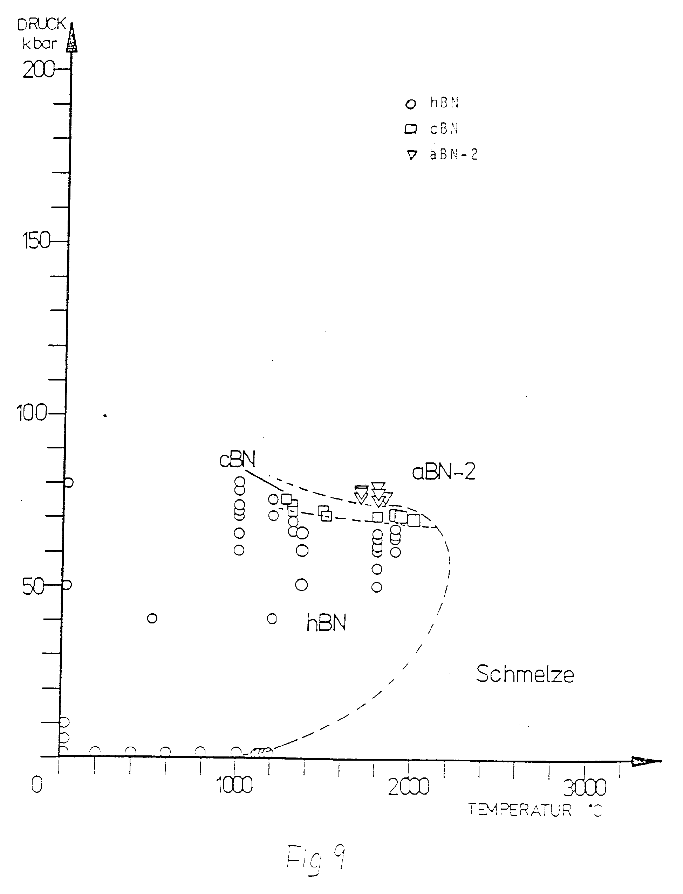

- Figur 9: das Phasendiagramm von hexagonalem Bornitrid (hBN), kubischem Bornitrid (cBN) und amorphem erfindungsgemäßen Bornitrid (aBN-2) in Abhängigkeit von Druck und Temperatur, wie es durch Versuche zur direkten Synthese von amorphen aBN-2 ermittelt wurde. Es stellen 0 das hBN, □ das cBN und ∇ das aBN-2 dar. Die unterbrochen gezeichneten Linien deuten die angenommenen Phasengrenzen zwischen den physikalisch unterschiedlichen Substanzen an. Die Identifizierung der Phasen erfolgte nach dem Abschrecken und Dekompression. Bei In-Situ-Verfahren ist es denkbar, daß sich die Phasengrenzen verschieben.
- Figur 10: eine Fotografie in 50-facher Vergrößerung einer mit amorphen aBN-2 Körnern geritzten Tafelfläche (Fläche 001) eines mit Brillantschliff versehenen Diamanten.
- Figur 11: ein Schnittbild von aBN-2 Körner in Vergrößerung, das die amöbenartige äußere Gestalt zeigt. Die weißen Flecken stellen geschmolzene Platintröpfchen Pt dar.

Das Diagramm und die miteinander verglichenen Herstellungsverfahren von cBN and aBN-2 verdeutlichen, daß man aBN-2 erhält, wenn die Reaktionsbedingungen so gewählt werden, daß der Druck für die Herstellung von aBN-2 deutlich höher gewählt wird als für die Herstellung von cBN bei insgesamt hohen Temperaturen.

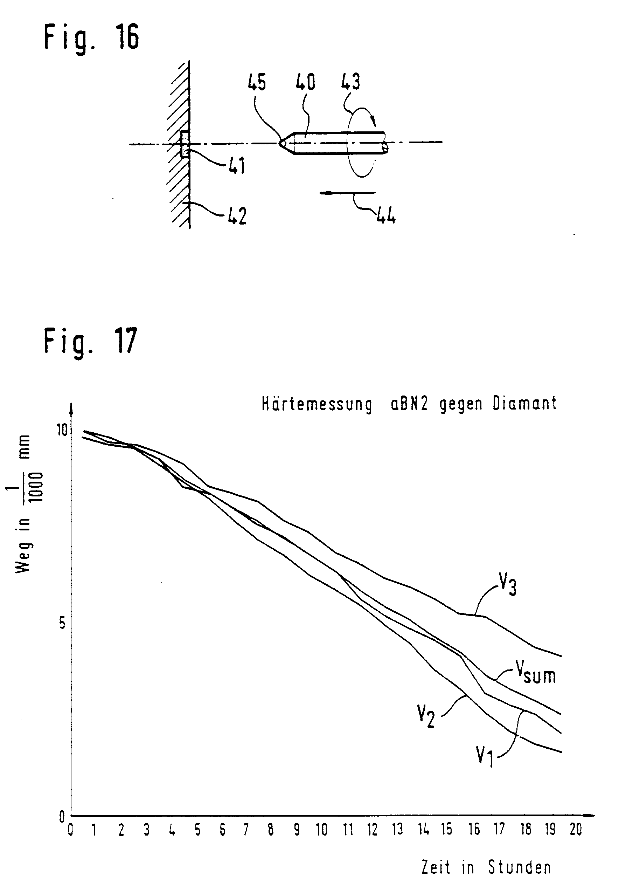

Zum Nachweis der Härte des erfindungsgemäßen aBN-2 wurde eine Härtemessung gemäß dem schematisch in Figur 16 dargestellten Aufbau durchgeführt. Ein Diamant 41 wurde in einer Platte 42 fest eingespannt. Ein Bohrer 40 wurde an der Spitze mit Körnern 45 aus amorphem aBN-2 bestückt. Der Bohrer 40 wurde dann mit 30.000 Umdrehungen je Minute und einer Andruckkraft von 250g auf den Diamanten 41 senkrecht angedrückt. Hierbei wird eine Kraft von 8 t an der Spitze des aBN-2-Materials erreicht, die auf dem fest eingespannten Diamanten 41 lasten. Dieser Versuch wurde über mehrere Stunden hindurch geführt, wobei im Laufe der Zeit eine Abtragung des Diamanten durch die Bohrerspitze 45 bewirkt wird, die dann als Eindringung in den Diamanten als Wegstrecke gemessen werden kann.

In der Figur 17 sind gemäß Figur 16 durchgeführte Härtemessungen von aBN-2 gegen Diamant dargestellt, und zwar wurden drei Versuche V1, V2, V3 durchgeführt, wobei die sich hieraus ergebende Mittelkurve Vsum ebenfalls eingezeichnet ist. Es wurde die Eindringtiefe in den Diamanten 41 über die Zeit in Stunden gemessen.
Damit ist der Nachweis erbracht, daß das erfindungsgemäße elektronen- und röntgenstrahlamorphe aBN-2 in der Lage ist, Diamant zu ritzen und eine diesem vergleichbare Härte aufweist.

Des weiteren wurden aBN-2 und cBN harter Röntgenstrahlung (Synchrotonstrahlung) unterworfen und die Diagramme aufgezeichnet.

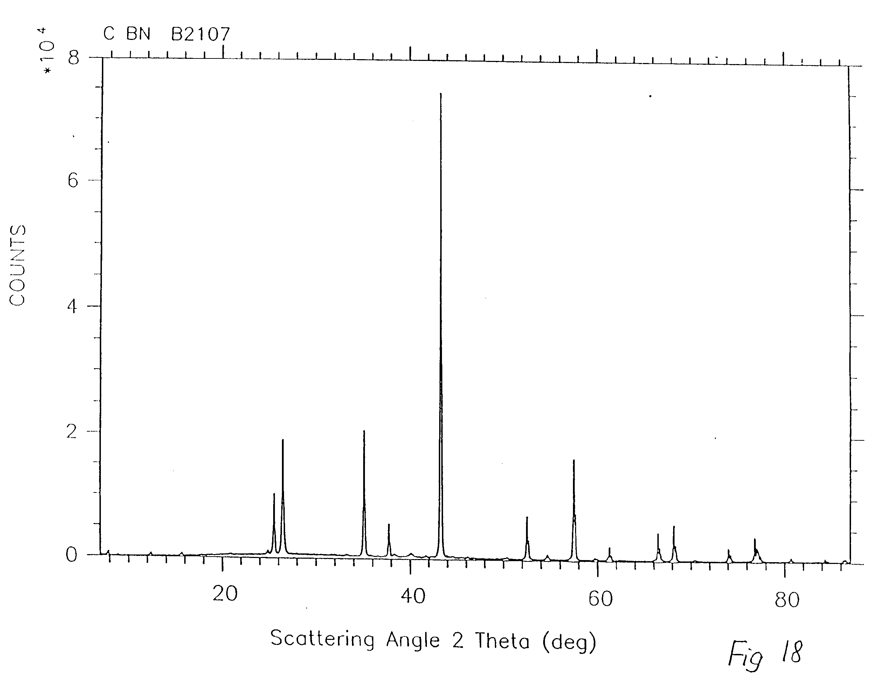

In der Figur 18 ist die aufgezeichnete Kurve von cBN dargestellt, wobei die Winkeldispersion bei harter Röntgenstrahlung mit einem Diffraktometer gemessen wurde. Es sind die einzelnen Peaks deutlich erkennbar, die den Nachweis der Kristallstruktur des cBN erbringen.

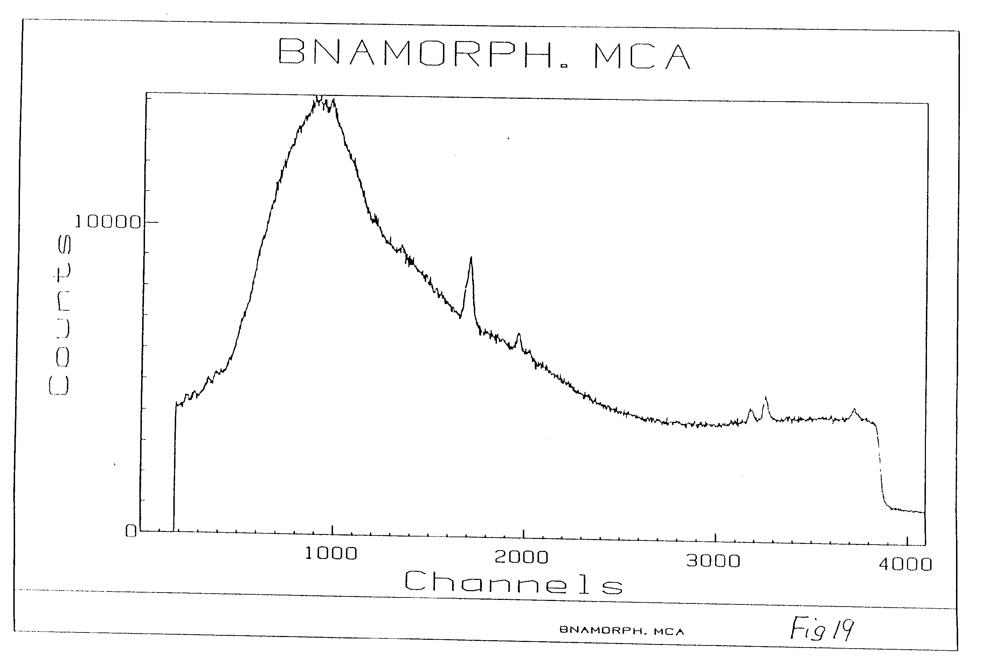

In der Figur 19 ist das gemessene Diagramm von amorphem aBN-2 dargestellt, und zwar die Energiedispersion, gemessen im Diffraktometer, jedoch mit einer wesentlich höheren Auflösung, da das aBN-2 keine Kristallstruktur aufweist und insoweit in einer Darstellung gemäß Figur 18 überhaupt keine Meßkurve erkennbar wäre. Die in der Figur 19 von der aufgezeichneten Meßkurve erkennbaren kleineren nach oben gerichteten Peaks sind verursacht durch die Befestigungsmittel der aBN-2-Körner auf einem Meßkopf und daher für die Betrachtung bezüglich des aBN-2 auszuklammern. Die amorphe Struktur des aBN-2 ist mit diesem Meßergebnis gemäß Figur 19 ebenfalls nachgewiesen.

## Patentansprüche

1. Bornitrid (aBN-2) mit röntgen- und elektronenstrahlamorpher Struktur und mit einer zum Ritzen von Diamant ausreichenden Härte.

2. Verfahren zum Herstellen von Bornitrid hoher Härte aus hexagonalem oder turbostratischem Bornitrid (BN) als Ausgangsmaterial, das bei Drucken von über 70 Kbar, bevorzugt 75 Kbar oder mehr und Temperaturen von mindestens 1650°C oder höher behandelt wird, **dadurch gekennzeichnet,** daß das Ausgangsmaterial den Drucken und der Temperatur so lange unterworfen wird, bis es vollständig aufgeschmolzen ist, anschließend die so erhaltene Bornitridschmelze abgeschreckt wird und Körner von amorphem Bornitrid (aBN-2) mit röntgen- und elektronenstrahlamorpher Struktur und einer zum Ritzen von Diamant ausreichenden Härte gebildet werden.

3. Verfahren nach Anspruch 2,
**dadurch gekennzeichnet,** daß zum Abschrecken der Bornitrid-Schmelze zuerst die Wärmezufuhr abgestellt und danach die Druckentlastung durchgeführt wird.

4. Verfahren nach Anspruch 2 oder 3,
**dadurch gekennzeichnet**, daß das Ausgangsmaterial (BN) den gewünschten Reaktionsbedingungen von Temperatur und Druck während eines längeren, mehrminütigen Zeitraumes unterworfen wird.

5. Verfahren nach einem der Anspruche 2 bis 4,
**dadurch gekennzeichnet**, daß das Ausgangsmaterial (BN) Drucken von mindestens 75 Kbar und Temperaturen von mindestens 1900°C unterworfen wird.

6. Verfahren nach einem der Ansprüche 2 bis 5,
**dadurch gekennzeichnet,** daß dem Ausgangsmaterial (BN) ein passiver Katalysator wie Wasser (H₂O), Kohlenstoff (C), Platin (Pt), Zirkonium (Zr) oder Kobalt (Co) zugegeben wird.

7. Verfahren nach Anspruch 6,
**dadurch gekennzeichnet,** daß passiver Katalysator in Mengen von 3 bis 20 Gew.-% , bezogen auf die Menge des Ausgangsmaterials (BN), zugegeben wird.

## Claims

1. Boron nitride (aBN-2) with an amorphos structure as determined by electron beam and X-ray, and with a hardness sufficient to scratch diamond.

2. Process for the production of boron nitride of high hardness from hexagonal or turbostratic boron nitride (BN) as starting material, being subjected to pressures above 70 Kbar, preferably 75 Kbar or more and temperatures of at least 1650 °C or higher, **characterized in that** the starting material is subjected to the pressures and the temperature for long enough for it to be completely melted, following which the thus obtained boron nitride melt is quenched and grains of amorphous boron nitride (aBN-2) with X-ray and electron beam amorphous structure and with a hardness sufficient to scratch diamond are formed.

3. Process according to Claim 2, **characterized in that** to quench the boron nitride melt the heat supply is first stopped and after this, pressure relief is performed.

4. Process according to Claims 2 or 3, **characterized in that** the staring material (BN) is subjected to the desired reaction conditions of temperature and pressure for a long period of serveral minutes.

5. Process according to one of Claims 2 to 4, **characterized in** **that** the starting material (BN) is subjected to pressures of at least 75 Kbar and temperatures of at least 1900°C.

6. Process according to one of Claims 2 to 5, **characterized in** **that** a passive catalyst such as water (H₂O), carbon (C), platinum (Pt), zirconium (Zr) or cobalt (Co) is added to the starting material (BN).

7. Process according to claim 6, **characterized in that** the passive catalyst is added in amounts of 3 - 20 wt.%, based on the amount of the starting material (BN).

## Revendications

1. Nitrure de bore (aBN-2) à structure amorphe vis-à-vis des rayons X et des rayons électroniques, et qui possède une dureté suffisante pour rayer le diamant.

2. Procédé pour la préparation de nitrure de bore à dureté élevée à partir de nitrure de bore (BN) hexagonal ou turbostratique comme matière de départ que l'on traite sous des pressions supérieures à 70 kbar, de préférence de 75 kbar ou plus et à des températures d'au moins 1650°C ou plus, caractérisé en ce que la matière de départ est soumise aux pressions et à la température jusqu'à ce qu'elle soit complètement fondue, ensuite la masse fondue de nitrure de bore ainsi obtenue est soumise à une trempe et on forme des grains de nitrure de bore amorphe (aBN-2) à structure amorphe vis-à-vis des rayons X et des rayons électroniques, et possédant une dureté suffisante pour rayer le diamant.

3. Procédé selon la revendication 2, caractérisé en ce que, pour la trempe de la masse fondue de nitrure de bore, on coupe tout d'abord l'alimentation en chaleur et ensuite, on procède au relâchement de la pression.

4. Procédé selon la revendication 2 ou 3, caractérisé en ce que la matière de départ (BN) est soumise aux conditions réactionnelles désirées de température et de pression pendant un laps de temps prolongé de l'ordre de plusieurs minutes.

5. Procédé selon l'une des revendications 2 à 4, caractérisé en ce que la matière de départ (BN) est soumise à des pressions d'au moins 75 kbar et à des températures d'au moins 1900°C.

6. Procédé selon l'une des revendications 2 à 5, caractérisé en ce qu'on ajoute, à la matière de départ (BN), un catalyseur passif tel que l'eau (H₂O), le carbone (C), le platine (Pt), le zirconium (Zr) ou le cobalt (Co).

7. Procédé selon la revendication 6, caractérisé en ce qu'on ajoute le catalyseur passif dans des quantités de 3 à 20% en poids, rapportées à la quantité de la matière de départ (BN).
